# EUROPEAN PATENT SPECIFICATION

(11) **EP 3 386 254 B1**
(45) Date of publication and mention of the grant of the patent: **21.10.2020**
(21) Application number: 15912029.4
(22) Date of filing: 31.12.2015
(51) Int. Cl.: H04W 72/04, H04W 68/00, H04B 7/26, H04L 5/00

(54) **CROSS-CARRIER SCHEDULING METHODS, AND APPARATUSES**
VERFAHREN ZUR TRÄGERÜBERGREIFENDEN PLANUNG, UND VORRICHTUNGEN
PROCÉDÉS DE PROGRAMMATION INTER-PORTEUSE, ET APPAREILS

(43) Date of publication of application: 10.10.2018
(73) Proprietor: Huawei Technologies Co., Ltd., Longgang District Shenzhen, Guangdong 518129 (CN)
(72) Inventor: DAI, Mingzeng, Shenzhen, Guangdong 518129 (CN); HUANG, Qufang, Shenzhen, Guangdong 518129 (CN); ZHANG, Jian, Shenzhen, Guangdong 518129 (CN); ZENG, Qinghai, Shenzhen, Guangdong 518129 (CN); GUO, Yi, Shenzhen, Guangdong 518129 (CN)
(74) Representative: Körber, Martin Hans
(86) International application number: PCT/CN2015/100334
(87) International publication number: WO 2017/113405

(56) References cited:
- EP-A1- 3 340 710
- CN-A- 1 794 625
- CN-A- 101 176 277
- CN-A- 101 272 177
- CN-A- 103 546 253
- CN-A- 103 580 822
- US-A1- 2010 322 229
- US-A1- 2014 293 893
- INTERDIGITAL COMMUNICATIONS: "Support for Short TTIs and Processing Times in LTE", 3GPP DRAFT; R1-157136 (REL-13 SHORT TTIS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151116 - 20151120 15 November 2015 (2015-11-15), XP051003403, Retrieved from the Internet: URL:http://www.3gpp.org/ftp/Meetings_3GPP_ SYNC/RAN1/Docs/ [retrieved on 2015-11-15]

## Description

### TECHNICAL FIELD

This application relates to the field of wireless communications technologies, and in particular, to cross carrier scheduling methods and corresponding apparatuses.

### BACKGROUND

A maximum bandwidth of a Long Term Evolution (Long Term Evolution, LTE for short) system is 20 MHz. A peak rate of a Long Term Evolution-Advanced (LTE-Advanced, LTE-A for short) system has been greatly improved compared with that of the LTE system. In the LTE-A system, a downlink peak rate needs to reach 1 Gbps and an uplink peak rate needs to reach 500 Mbps. Apparently, the bandwidth of 20 MHz can no longer meet the requirement. To make the LTE-A system meet the requirement, a carrier aggregation (Carrier Aggregation, CA for short) technology is defined in a phase of 3GPP (the 3rd Generation Partnership Project, the 3rd Generation Partnership Project) Release 10, that is, a plurality of carriers that are in a same band or different bands are aggregated to form a larger bandwidth, to jointly serve user equipment (user equipment, UE for short) at the same time if necessary, to provide a required rate. Based on the CA, resource utilization can be maximized, and discrete spectrum resources can be effectively used.

An aggregated carrier includes a plurality of CCs (Component Carrier, component carrier), and the plurality of CCs include one primary carrier (Primary Carrier, PC for short) and one or more secondary carriers (Secondary Carrier, SC for short). Service data and control information may be sent both on a primary carrier and a secondary carrier.

When the carrier aggregation is used, a base station needs to send scheduling signaling that indicates each carrier. A current protocol supports two scheduling manners: independent carrier scheduling and cross-carrier scheduling. For the cross-carrier scheduling, scheduling signaling of a SCell is allowed to be carried in a PDCCH (Physical Downlink Control Channel, physical downlink control channel)/an ePDCCH (Enhanced Physical Downlink Control Channel, enhanced physical downlink control channel) of a PCC. The cross-carrier scheduling is configured, so that for a same subframe, scheduling signaling of a plurality of different CCs of same UE may need to be transmitted on a single CC at the same time. Therefore, a probability that the scheduling signaling is successfully transmitted can be improved, and PDCCH resources on a carrier can be fully used.

Existing CA is implemented for CCs having same TTIs (Transmission Time Interval, transmission time interval), that is, TTIs of a plurality of aggregated CCs that can be used by UE at the same time are the same. At present, a shorter TTI, for example, a TTI of 0.5 ms or a TTI of 0.1 ms is introduced by the 3GPP. For how to aggregate CCs with different TTIs, there is no specific solution.

Document US 2014/0293893 A1 introduces a system and method for transmiiting control

information associated with scheduling data in communication systems with aggregation of one or more TDD cells with one or more FDD cells.

Document EP 3340710 A1 discloses methods to transmit scheduling information in a state of coexistence of a shortened TTI and the normal TTI in case of carrier aggregation.

### SUMMARY

The present invention is defined by a carrier scheduling method according to independent claim 1 and independent claim 2, a carrier scheduling apparatus according to independent claim 3 and independent claim 4.

Embodiments of this application provide a cross-carrier scheduling method, a feedback method, and an apparatus, so that when carrier aggregation is performed on CCs with different TTIs, user equipment can accurately determine a position of a resource block in a carrier.

A first aspect of the embodiments of this application provides a cross-carrier scheduling method, including:
determining, by a base station, transmission time interval TTI indication information based on a resource block scheduled for user equipment, where the TTI indication information is used to indicate a position, in a scheduled carrier, of a TTI of a subframe in which the resource block is located; and
sending, by the base station, the TTI indication information to the user equipment by using a scheduling carrier.

In this embodiment of this application, when scheduling the resource block for the user equipment, the base station indicates, to the user equipment by using the TTI indication information, the TTI of the subframe in which the resource block is located, so that the user equipment can accurately determine the position of the resource block in the carrier.

With reference to the first aspect, in a first possible implementation of the first aspect, a TTI corresponding to the scheduled carrier is shorter than a TTI corresponding to the scheduling carrier.

With reference to the first aspect, in a second possible implementation of the first aspect, the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer.

With reference to the second possible implementation of the first aspect, in a third possible implementation of the first aspect, the TTI indication information is K TTI identifiers, each TTI identifier indicates a position of one TTI in the N TTIs, and K is a positive integer.

In the foregoing method, the base station may directly indicate, by using the TTI identifier, the TTI of the subframe in which the resource block is located.

With reference to the third possible implementation of the first aspect, in a fourth possible implementation of the first aspect, a correspondence between a TTI identifier and a position of a TTI in the N TTIs is sent by the base station to the user equipment by using Radio Resource Control RRC signaling.

With reference to the first aspect, in a fifth possible implementation of the first aspect, the TTI indication information is a resource block number of the resource block.

In the foregoing method, the TTI of the subframe in which the resource block is located may be indirectly indicated by using the resource block number.

With reference to the first aspect, in a sixth possible implementation of the first aspect, the TTI indication information is a carrier indicator field CIF, used to indicate that the position, in the scheduled carrier, of the TTI of the subframe in which the resource block is located, is a preset position.

In the foregoing method, the TTI of the subframe in which the resource block is located is indicated by using an existing CIF, so that the TTI of the subframe in which the resource block is located can be indicated without increasing system load.

With reference to any one of the first aspect or the first possible implementation to the sixth possible implementation of the first aspect, in a seventh possible implementation of the first aspect, the resource block is used to carry uplink signaling or uplink data sent by the user equipment.

With reference to the seventh possible implementation of the first aspect, in an eighth possible implementation of the first aspect, the method further includes:
sending, by the base station, symbol indication information to the user equipment, where the symbol indication information is used to indicate a position, in the subframe in which the resource block is located, of a symbol carrying the uplink signaling or the uplink data.

In the foregoing method, when the base station indicates the TTI of the subframe in which the resource block is located, a position of a symbol corresponding to the resource block may further be indicated.

With reference to any one of the first aspect or the first possible implementation to the eighth possible implementation of the first aspect, in a ninth possible implementation of the first aspect, the scheduled carrier is a carrier in an unlicensed band, or the scheduled carrier is a carrier in a licensed band; and
the scheduling carrier is a carrier in an unlicensed band, or the scheduling carrier is a carrier in a licensed band.

A second aspect of the embodiments of this application provides a cross-carrier scheduling method, including:
receiving, by user equipment, transmission time interval TTI indication information that is sent by using a scheduling carrier; and
determining, by the user equipment based on the TTI indication information, a position, in a scheduled carrier, of a TTI of a subframe in which a resource block scheduled by a base station is located.

In this embodiment of this application, the user equipment may determine, by using the TTI indication information, the TTI of the subframe in which the resource block scheduled by the base station is located, so that the position of the resource block can be accurately determined.

With reference to the second aspect, in a first possible implementation of the second aspect, a TTI corresponding to the scheduled carrier is shorter than a TTI corresponding to the scheduling carrier.

With reference to the second aspect, in a second possible implementation of the second aspect, the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer.

With reference to the second possible implementation of the second aspect, in a third possible implementation of the second aspect, the TTI indication information is K TTI identifiers, each TTI identifier indicates a position of one TTI in the N TTIs, and K is a positive integer.

With reference to the third possible implementation of the second aspect, in a fourth possible implementation of the second aspect, a correspondence between a TTI identifier and a position of a TTI in the N TTIs is sent by the base station to the user equipment by using Radio Resource Control RRC signaling.

With reference to the fourth possible implementation of the second aspect, in a fifth possible implementation of the second aspect, the TTI indication information is a resource block number of the resource block.

With reference to the second aspect, in a sixth possible implementation of the second aspect, the TTI indication information is a carrier indicator field CIF, used to indicate that the position, in the scheduled carrier, of the TTI of the subframe in which the resource block is located, is a preset position.

With reference to the second aspect, in a seventh possible implementation of the second aspect, the user equipment sends uplink signaling or uplink data by using the resource block.

With reference to the seventh possible implementation of the second aspect, in an eighth possible implementation of the second aspect, the method further includes:
receiving, by the user equipment, symbol indication information sent by the base station, where the symbol indication information is used to indicate a position, in the subframe in which the resource block is located, of a symbol carrying the uplink signaling or the uplink data.

With reference to the seventh possible implementation of the second aspect, in a ninth possible implementation of the second aspect, before the sending, by the user equipment, uplink signaling or uplink data by using the resource block, the method further includes:
determining, by the user equipment based on listen before talk LBT, that the resource block is available.

With reference to any one of the second aspect or the first possible implementation to the ninth possible implementation of the second aspect, in a tenth possible implementation of the second aspect, the scheduled carrier is a carrier in an unlicensed band, or the scheduled carrier is a carrier in a licensed band; and
the scheduling carrier is a carrier in an unlicensed band, or the scheduling carrier is a carrier in a licensed band.

A third aspect of the embodiments of this application provides a feedback method, including:
receiving, by user equipment, N pieces of downlink data in N downlink subframes, where N is a positive integer; and
determining, by the user equipment, a target carrier used to feed back an answer message of the N pieces of downlink data, and sending the answer message to a base station by using the target carrier.

In this embodiment of this application, the user equipment indicates receiving statuses of the received N pieces of downlink data by using the answer message, so that the base station can determine whether data needs to be retransmitted.

With reference to the third aspect, in a first possible implementation of the third aspect, the determining, by the user equipment, a target carrier used to feed back an answer message of the N pieces of downlink data includes:
determining, by the user equipment, a component carrier having a shortest transmission time interval TTI in available component carriers, and determining a component carrier having a smallest carrier number identifier in the component carrier having the shortest TTI, as the target carrier used to feed back the answer message of the N pieces of downlink data.

With reference to the third aspect, in a second possible implementation of the third aspect, if it is determined that a physical uplink shared channel PUSCH is not to be transmitted, the available component carrier is a carrier in which a physical uplink control channel PUCCH is located; or
if it is determined that a PUSCH is to be transmitted, the available component carrier is a carrier in which the PUSCH is located.

With reference to any one of the third aspect or the first possible implementation of the third aspect or the second possible implementation of the third aspect, in a third possible implementation of the third aspect, the answer message includes N hybrid automatic repeat request HARQ acknowledgement messages and N pieces of subframe position indication information corresponding to the N HARQ acknowledgement messages; and
for any one of the N HARQ acknowledgement messages, the HARQ acknowledgement message is used to indicate a receiving status of downlink data carried in a downlink subframe indicated by the subframe position indication information corresponding to the HARQ acknowledgement message.

In the foregoing method, the position of each subframe is indicated by using the subframe position indication information, so that the HARQ acknowledgement message of each piece of downlink data is distinguished, and therefore the base station determines the receiving status of each piece of downlink data.

With reference to the third possible implementation of the third aspect, in a fourth possible implementation of the third aspect, the subframe position indication information is a downlink subframe identifier.

With reference to the fourth possible implementation of the third aspect, in a fifth possible implementation of the third aspect, a correspondence between a downlink subframe identifier and a position of a downlink subframe in a carrier is sent by the base station to the user equipment by using Radio Resource Control RRC signaling.

With reference to any one of the third aspect or the first possible implementation of the third aspect to the fifth possible implementation of the third aspect, in a sixth possible implementation of the third aspect, the answer message is obtained by the user equipment by performing a logical AND operation on the N HARQ acknowledgement messages corresponding to the N pieces of downlink data.

In the foregoing method, the receiving statuses of all the pieces of downlink data are indicated by using one answer message, thereby reducing system load.

A fourth aspect of the embodiments of this application provides a feedback method, including:
receiving, by a base station by using a target carrier, an answer message sent by user equipment; and
determining, by the base station based on the answer message, receiving statuses of N pieces of downlink data that are received by the user equipment in N downlink subframes, where N is a positive integer.

With reference to the fourth aspect, in a first possible implementation of the fourth aspect, the answer message includes N hybrid automatic repeat request HARQ acknowledgement messages and N pieces of subframe position indication information corresponding to the N HARQ acknowledgement messages; and
for any one of the N HARQ acknowledgement messages, the HARQ acknowledgement message is used to indicate a receiving status of downlink data carried in a downlink subframe indicated by the subframe position indication information corresponding to the HARQ acknowledgement message.

With reference to the fourth aspect, in a second possible implementation of the fourth aspect, the answer message is obtained by the user equipment by performing a logical AND operation on the N HARQ acknowledgement messages corresponding to the N pieces of downlink data.

With reference to the second possible implementation of the fourth aspect, in a third possible implementation of the fourth aspect, the method further includes:
if determining that the answer message is a negative acknowledgement NACK, re-sending, by the base station, the N pieces of downlink data to the user equipment.

A fifth aspect of the embodiments of this application provides a carrier scheduling apparatus, including:
a determining unit, configured to determine transmission time interval TTI indication information based on a resource block scheduled for user equipment, where the TTI indication information is used to indicate a position, in a scheduled carrier, of a TTI of a subframe in which the resource block is located; and
a sending unit, configured to send the TTI indication information to the user equipment by using a scheduling carrier.

With reference to the fifth aspect, in a first possible implementation of the fifth aspect, a TTI corresponding to the scheduled carrier is shorter than a TTI corresponding to the scheduling carrier.

With reference to the fifth aspect, in a second possible implementation of the fifth aspect, the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer.

With reference to the second possible implementation of the fifth aspect, in a third possible implementation of the fifth aspect, the TTI indication information is K TTI identifiers, each TTI identifier indicates a position of one TTI in the N TTIs, and K is a positive integer.

With reference to the third possible implementation of the fifth aspect, in a fourth possible implementation of the fifth aspect, a correspondence between a TTI identifier and a position of a TTI in the N TTIs is sent by the base station to the user equipment by using Radio Resource Control RRC signaling.

With reference to the fifth aspect, in a fifth possible implementation of the fifth aspect, the TTI indication information is a resource block number of the resource block.

With reference to the fifth aspect, in a sixth possible implementation of the fifth aspect, the TTI indication information is a carrier indicator field CIF, used to indicate that the position, in the scheduled carrier, of the TTI of the subframe in which the resource block is located, is a preset position.

With reference to any one of the fifth aspect or the first possible implementation to the sixth possible implementation of the fifth aspect, in a seventh possible implementation of the fifth aspect, the resource block is used to carry uplink signaling or uplink data sent by the user equipment.

With reference to the seventh possible implementation of the fifth aspect, in an eighth possible implementation of the fifth aspect, the sending unit is further configured to:
send symbol indication information to the user equipment, where the symbol indication information is used to indicate a position, in the subframe in which the resource block is located, of a symbol carrying the uplink signaling or the uplink data.

With reference to any one of the fifth aspect or the first possible implementation to the eighth possible implementation of the fifth aspect, in a ninth possible implementation of the fifth aspect, the scheduled carrier is a carrier in an unlicensed band, or the scheduled carrier is a carrier in a licensed band; and
the scheduling carrier is a carrier in an unlicensed band, or the scheduling carrier is a carrier in a licensed band.

A sixth aspect of the embodiments of this application provides a carrier scheduling apparatus, including:
a transceiver unit, configured to receive transmission time interval TTI indication information that is sent by using a scheduling carrier; and
a determining unit, configured to determine, based on the TTI indication information, a position, in a scheduled carrier, of a TTI of a subframe in which a resource block scheduled by a base station is located.

With reference to the sixth aspect, in a first possible implementation of the sixth aspect, a TTI corresponding to the scheduled carrier is shorter than a TTI corresponding to the scheduling carrier.

With reference to the sixth aspect, in a second possible implementation of the sixth aspect, the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer.

With reference to the second possible implementation of the sixth aspect, in a third possible implementation of the sixth aspect, the TTI indication information is K TTI identifiers, each TTI identifier indicates a position of one TTI in the N TTIs, and K is a positive integer.

With reference to the third possible implementation of the sixth aspect, in a fourth possible implementation of the sixth aspect, a correspondence between a TTI identifier and a position of a TTI in the N TTIs is sent by the base station to the user equipment by using Radio Resource Control RRC signaling.

With reference to the fourth possible implementation of the sixth aspect, in a fifth possible implementation of the sixth aspect, the TTI indication information is a resource block number of the resource block.

With reference to the sixth aspect, in a sixth possible implementation of the sixth aspect, the TTI indication information is a carrier indicator field CIF, used to indicate that the position, in the scheduled carrier, of the TTI of the subframe in which the resource block is located, is a preset position.

With reference to the sixth aspect, in a seventh possible implementation of the sixth aspect, the transceiver unit is specifically configured to:
send uplink signaling or uplink data by using the resource block.

With reference to the seventh possible implementation of the sixth aspect, in an eighth possible implementation of the sixth aspect, the transceiver unit is further configured to:
receive symbol indication information sent by the base station, where the symbol indication information is used to indicate a position, in the subframe in which the resource block is located, of a symbol carrying the uplink signaling or the uplink data.

With reference to the seventh possible implementation of the sixth aspect, in a ninth possible implementation of the sixth aspect, the transceiver unit is further configured to:
determine, based on listen before talk LBT, that the resource block is available.

With reference to any one of the sixth aspect or the first possible implementation to the ninth possible implementation of the sixth aspect, in a tenth possible implementation of the sixth aspect, the scheduled carrier is a carrier in an unlicensed band, or the scheduled carrier is a carrier in a licensed band; and
the scheduling carrier is a carrier in an unlicensed band, or the scheduling carrier is a carrier in a licensed band.

A seventh aspect of the embodiments of this application provides a feedback apparatus, including:
a transceiver unit, configured to receive N pieces of downlink data in N downlink subframes, where N is a positive integer; and
a determining unit, configured to determine a target carrier used to feed back an answer message of the N pieces of downlink data, where
the transceiver unit is configured to send the answer message to a base station by using the target carrier.

With reference to the seventh aspect, in a first possible implementation of the seventh aspect, the determining unit is specifically configured to:
determine a component carrier having a shortest transmission time interval TTI in available component carriers, and determine a component carrier having a smallest carrier number identifier in the component carrier having the shortest TTI, as the target carrier used to feed back the answer message of the N pieces of downlink data.

With reference to the seventh aspect, in a second possible implementation of the seventh aspect, the determining unit is specifically configured to:
if it is determined that a physical uplink shared channel PUSCH is not to be transmitted, the available component carrier is a carrier in which a physical uplink control channel PUCCH is located; or
if it is determined that a PUSCH is to be transmitted, the available component carrier is a carrier in which the PUSCH is located.

With reference to any one of the seventh aspect or the first possible implementation of the seventh aspect or the second possible implementation of the seventh aspect, in a third possible implementation of the seventh aspect, the answer message includes N hybrid automatic repeat request HARQ acknowledgement messages and N pieces of subframe position indication information corresponding to the N HARQ acknowledgement messages; and
for any one of the N HARQ acknowledgement messages, the HARQ acknowledgement message is used to indicate a receiving status of downlink data carried in a downlink subframe indicated by the subframe position indication information corresponding to the HARQ acknowledgement message.

With reference to the third possible implementation of the seventh aspect, in a fourth possible implementation of the seventh aspect, the subframe position indication information is a downlink subframe identifier.

With reference to the fourth possible implementation of the seventh aspect, in a fifth possible implementation of the seventh aspect, a correspondence between a downlink subframe identifier and a position of a downlink subframe in a carrier is sent by the base station to the user equipment by using Radio Resource Control RRC signaling.

With reference to any one of the seventh aspect or the first possible implementation of the seventh aspect to the fifth possible implementation of the seventh aspect, in a sixth possible implementation of the seventh aspect, the answer message is obtained by the user equipment by performing a logical AND operation on the N HARQ acknowledgement messages corresponding to the N pieces of downlink data.

An eighth aspect of the embodiments of this application provides a feedback apparatus, including:
a transceiver unit, configured to receive, by using a target carrier, an answer message sent by user equipment; and
a determining unit, configured to determine, based on the answer message, receiving statuses of N pieces of downlink data that are received by the user equipment in N downlink subframes, where N is a positive integer.

With reference to the eighth aspect, in a first possible implementation of the eighth aspect, the answer message includes N hybrid automatic repeat request HARQ acknowledgement messages and N pieces of subframe position indication information corresponding to the N HARQ acknowledgement messages; and
for any one of the N HARQ acknowledgement messages, the HARQ acknowledgement message is used to indicate a receiving status of downlink data carried in a downlink subframe indicated by the subframe position indication information corresponding to the HARQ acknowledgement message.

With reference to the eighth aspect, in a second possible implementation of the eighth aspect, the answer message is obtained by the user equipment by performing a logical AND operation on the N HARQ acknowledgement messages corresponding to the N pieces of downlink data.

With reference to the second possible implementation of the eighth aspect, in a third possible implementation of the eighth aspect, the transceiver unit is further configured to:
if it is determined that the answer message is a negative acknowledgement NACK, re-send the N pieces of downlink data to the user equipment.

A ninth aspect of the embodiments of this application provides a carrier scheduling apparatus, including:
a processor, configured to determine transmission time interval TTI indication information based on a resource block scheduled for user equipment, where the TTI indication information is used to indicate a position, in a scheduled carrier, of a TTI of a subframe in which the resource block is located; and
a transceiver, configured to send the TTI indication information to the user equipment by using a scheduling carrier.

With reference to the ninth aspect, in a first possible implementation of the ninth aspect, a TTI corresponding to the scheduled carrier is shorter than a TTI corresponding to the scheduling carrier.

With reference to the ninth aspect, in a second possible implementation of the ninth aspect, the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer.

With reference to the second possible implementation of the ninth aspect, in a third possible implementation of the ninth aspect, the TTI indication information is K TTI identifiers, each TTI identifier indicates a position of one TTI in the N TTIs, and K is a positive integer.

With reference to the third possible implementation of the ninth aspect, in a fourth possible implementation of the ninth aspect, a correspondence between a TTI identifier and a position of a TTI in the N TTIs is sent by the base station to the user equipment by using Radio Resource Control RRC signaling.

With reference to the ninth aspect, in a fifth possible implementation of the ninth aspect, the TTI indication information is a resource block number of the resource block.

With reference to the ninth aspect, in a sixth possible implementation of the ninth aspect, the TTI indication information is a carrier indicator field CIF, used to indicate that the position, in the scheduled carrier, of the TTI of the subframe in which the resource block is located, is a preset position.

With reference to any one of the ninth aspect or the first possible implementation to the sixth possible implementation of the ninth aspect, in a seventh possible implementation of the ninth aspect, the resource block is used to carry uplink signaling or uplink data sent by the user equipment.

With reference to the seventh possible implementation of the ninth aspect, in an eighth possible implementation of the ninth aspect, the transceiver is further configured to:
send symbol indication information to the user equipment, where the symbol indication information is used to indicate a position, in the subframe in which the resource block is located, of a symbol carrying the uplink signaling or the uplink data.

With reference to any one of the ninth aspect or the first possible implementation to the eighth possible implementation of the ninth aspect, in a ninth possible implementation of the ninth aspect, the scheduled carrier is a carrier in an unlicensed band, or the scheduled carrier is a carrier in a licensed band; and
the scheduling carrier is a carrier in an unlicensed band, or the scheduling carrier is a carrier in a licensed band.

A tenth aspect of the embodiments of this application provides a carrier scheduling apparatus, including:
a transceiver, configured to receive transmission time interval TTI indication information that is sent by using a scheduling carrier; and
a processor, configured to determine, based on the TTI indication information, a position, in a scheduled carrier, of a TTI of a subframe in which a resource block scheduled by a base station is located.

With reference to the tenth aspect, in a first possible implementation of the tenth aspect, a TTI corresponding to the scheduled carrier is shorter than a TTI corresponding to the scheduling carrier.

With reference to the tenth aspect, in a second possible implementation of the tenth aspect, the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer.

With reference to the second possible implementation of the tenth aspect, in a third possible implementation of the tenth aspect, the TTI indication information is K TTI identifiers, each TTI identifier indicates a position of one TTI in the N TTIs, and K is a positive integer.

With reference to the third possible implementation of the tenth aspect, in a fourth possible implementation of the tenth aspect, a correspondence between a TTI identifier and a position of a TTI in the N TTIs is sent by the base station to the user equipment by using Radio Resource Control RRC signaling.

With reference to the fourth possible implementation of the tenth aspect, in a fifth possible implementation of the tenth aspect, the TTI indication information is a resource block number of the resource block.

With reference to the tenth aspect, in a sixth possible implementation of the tenth aspect, the TTI indication information is a carrier indicator field CIF, used to indicate that the position, in the scheduled carrier, of the TTI of the subframe in which the resource block is located, is a preset position.

With reference to the tenth aspect, in a seventh possible implementation of the tenth aspect, the transceiver is further configured to:
send uplink signaling or uplink data by using the resource block.

With reference to the seventh possible implementation of the tenth aspect, in an eighth possible implementation of the tenth aspect, the transceiver is further configured to:
receive symbol indication information sent by the base station, where the symbol indication information is used to indicate a position, in the subframe in which the resource block is located, of a symbol carrying the uplink signaling or the uplink data.

With reference to the seventh possible implementation of the tenth aspect, in a ninth possible implementation of the tenth aspect, the transceiver is further configured to:
determine, based on listen before talk LBT, that the resource block is available.

With reference to any one of the tenth aspect or the first possible implementation to the ninth possible implementation of the tenth aspect, in a tenth possible implementation of the tenth aspect, the scheduled carrier is a carrier in an unlicensed band, or the scheduled carrier is a carrier in a licensed band; and
the scheduling carrier is a carrier in an unlicensed band, or the scheduling carrier is a carrier in a licensed band.

An eleventh aspect of the embodiments of this application provides a feedback apparatus, including:
a transceiver, configured to receive N pieces of downlink data in N downlink subframes, where N is a positive integer; and
a processor, configured to: determine a target carrier used to feed back an answer message of the N pieces of downlink data, and send the answer message to a base station by using the target carrier.

With reference to the eleventh aspect, in a first possible implementation of the eleventh aspect, the processor is specifically configured to:
determine a component carrier having a shortest transmission time interval TTI in available component carriers, and determine a component carrier having a smallest carrier number identifier in the component carrier having the shortest TTI, as the target carrier used to feed back the answer message of the N pieces of downlink data.

With reference to the eleventh aspect, in a second possible implementation of the eleventh aspect, the processor is specifically configured to:
if it is determined that a physical uplink shared channel PUSCH is not to be transmitted, the available component carrier is a carrier in which a physical uplink control channel PUCCH is located; or
if it is determined that a PUSCH is to be transmitted, the available component carrier is a carrier in which the PUSCH is located.

With reference to any one of the eleventh aspect or the first possible implementation of the eleventh aspect or the second possible implementation of the eleventh aspect, in a third possible implementation of the eleventh aspect, the answer message includes N hybrid automatic repeat request HARQ acknowledgement messages and N pieces of subframe position indication information corresponding to the N HARQ acknowledgement messages; and
for any one of the N HARQ acknowledgement messages, the HARQ acknowledgement message is used to indicate a receiving status of downlink data carried in a downlink subframe indicated by the subframe position indication information corresponding to the HARQ acknowledgement message.

With reference to the third possible implementation of the eleventh aspect, in a fourth possible implementation of the eleventh aspect, the subframe position indication information is a downlink subframe identifier.

With reference to the fourth possible implementation of the eleventh aspect, in a fifth possible implementation of the eleventh aspect, a correspondence between a downlink subframe identifier and a position of a downlink subframe in a carrier is sent by the base station to the user equipment by using Radio Resource Control RRC signaling.

With reference to any one of the eleventh aspect or the first possible implementation of the eleventh aspect to the fifth possible implementation of the eleventh aspect, in a sixth possible implementation of the eleventh aspect, the answer message is obtained by the user equipment by performing a logical AND operation on the N HARQ acknowledgement messages corresponding to the N pieces of downlink data.

A twelfth aspect of the embodiments of this application provides a feedback apparatus, including:
a transceiver, configured to receive, by using a target carrier, an answer message sent by user equipment; and
a processor, configured to determine, based on the answer message, receiving statuses of N pieces of downlink data that are received by the user equipment in N downlink subframes, where N is a positive integer.

With reference to the twelfth aspect, in a first possible implementation of the twelfth aspect, the answer message includes N hybrid automatic repeat request HARQ acknowledgement messages and N pieces of subframe position indication information corresponding to the N HARQ acknowledgement messages; and
for any one of the N HARQ acknowledgement messages, the HARQ acknowledgement message is used to indicate a receiving status of downlink data carried in a downlink subframe indicated by the subframe position indication information corresponding to the HARQ acknowledgement message.

With reference to the twelfth aspect, in a second possible implementation of the twelfth aspect, the answer message is obtained by the user equipment by performing a logical AND operation on the N HARQ acknowledgement messages corresponding to the N pieces of downlink data.

With reference to the second possible implementation of the twelfth aspect, in a third possible implementation of the twelfth aspect, the transceiver is further configured to:
if it is determined that the answer message is a negative acknowledgement NACK, re-send the N pieces of downlink data to the user equipment.

### BRIEF DESCRIPTION OF DRAWINGS

FIG. 1 is a schematic diagram of cross-carrier scheduling in the prior art;
FIG. 2 is a schematic diagram of cross-carrier scheduling according to an embodiment of this application;
FIG. 3 is a schematic flowchart of a cross-carrier scheduling method according to an embodiment of this application;
FIG. 4 is a schematic diagram of cross-carrier scheduling according to an embodiment of this application;
FIG. 5 is a schematic diagram of cross-carrier scheduling according to an embodiment of this application;
FIG. 6 is a schematic diagram of cross-carrier scheduling according to an embodiment of this application;
FIG. 7 is a schematic flowchart of a feedback method according to an embodiment of this application;
FIG. 8 is a schematic structural diagram of a cross-carrier scheduling apparatus according to an embodiment of this application;
FIG. 9 is a schematic structural diagram of a cross-carrier scheduling apparatus according to an embodiment of this application;
FIG. 10 is a schematic structural diagram of a feedback apparatus according to an embodiment of this application;
FIG. 11 is a schematic structural diagram of a feedback apparatus according to an embodiment of this application;
FIG. 12 is a schematic structural diagram of a cross-carrier scheduling apparatus according to an embodiment of this application;
FIG. 13 is a schematic structural diagram of a cross-carrier scheduling apparatus according to an embodiment of this application;
FIG. 14 is a schematic structural diagram of a feedback apparatus according to an embodiment of this application; and
FIG. 15 is a schematic structural diagram of a feedback apparatus according to an embodiment of this application.

### DESCRIPTION OF EMBODIMENTS

To make the objectives, technical solutions, and advantageous effects of this application clearer and more comprehensible, the following further describes this application in detail with reference to the accompanying drawings and embodiments. It should be understood that the specific embodiments described herein are merely used to explain this application but are not intended to limit this application.

The embodiments of this application are applicable to LTE, and another network that can support a carrier aggregation technology, for example, a universal mobile telecommunications system terrestrial radio access network (Universal Mobile Telecommunications System Terrestrial Radio Access Network, UTRAN for short) that supports a dual carrier (Dual Carrier) technology, or an enhanced data rate for GSM evolution radio access network (Global System for Mobile Communication Enhanced Data Rate for GSM Evolution Radio Access Network, GERAN for short) that supports a downlink dual carrier (Downlink Dual Carrier) technology.

In the embodiments of this application, the term "user equipment" includes, but is not limited to, a mobile station, a fixed or mobile subscriber unit, a pager, a cellular telephone, a personal digital assistant (Personal Digital Assistant, PDA for short), a computer or any other type of user equipment that can work in a wireless environment. The term "base station" includes, but is not limited to, a base station, a node, a station controller, an access point (Access Point, AP for short), or any other type of interface device that can work in a wireless environment. The term "component carrier" is specifically a carrier on which CA can be performed, and may be a carrier in a licensed band, or may be a carrier in an unlicensed band.

The embodiments of this application may be applied to various CA scenarios that are not limited to intra-station CA, inter-station CA, CA in a heterogeneous network, or the like.

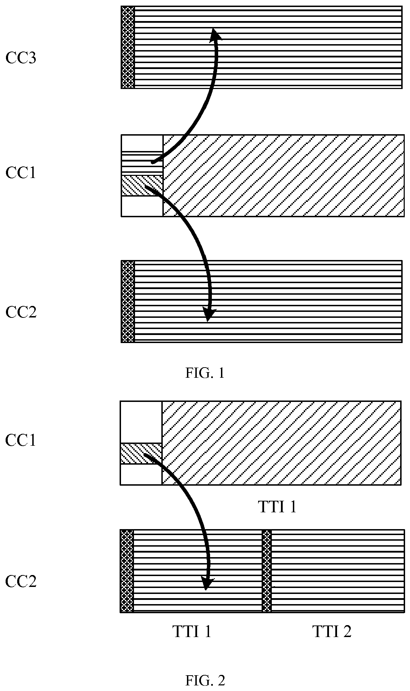

In the prior art, cross-carrier scheduling (cross-carrier scheduling) is allowed to be performed during CA, that is, a PDSCH (Physical Downlink Shared Channel, physical downlink shared channel) or a PUSCH (Physical Uplink Shared Channel, physical uplink shared channel) on another serving cell is scheduled by using a PDCCH/an ePDCCH on a cell. As shown in FIG. 1, FIG. 1 is a schematic diagram of cross-carrier scheduling in the prior art. Resource blocks in a CC 2 and a CC 3 may be scheduled by using a PDCCH in a CC 1. Because TTIs of a primary carrier and a secondary carrier are the same, during cross-carrier scheduling, a carrier in which a scheduled resource block is located is indicated by using a CIF (Carrier indicator field, carrier indicator field) in DCI (Downlink Control Information, downlink control information) carried in a PDCCH/an ePDCCH in the primary carrier, so that a TTI of a subframe in which the scheduled resource block is located may be determined, because a TTI in which a scheduled resource block in the secondary carrier is located is necessarily in a same time period as a TTI in which a scheduled resource block in the primary carrier is located. If a TTI corresponding to the primary carrier is longer than a TTI corresponding to the secondary carrier, one TTI in the primary carrier may correspond to a plurality of TTIs in the secondary carrier. However, a CIF can only be used to indicate a carrier in which a scheduled resource block is located. Consequently, after determining, based on the CIF, the carrier in which the scheduled resource block is located, user equipment cannot determine a TTI of a subframe in which the scheduled resource block is located. As shown in FIG. 2, FIG. 2 is a schematic diagram of cross-carrier scheduling according to an embodiment of this application. In FIG. 2, one TTI in a CC 1 is equal to two TTIs in a CC 2 that are respectively a TTI 1 and a TTI 2. In FIG. 2, when a resource on the CC 2 is scheduled by using a PDCCH in the CC 1, a base station can only indicate, by using a CIF, that a carrier in which the scheduled resource block is located is the CC 2, but cannot indicate whether a subframe in which the scheduled resource block is located is in the TTI 1 or the TTI 2 in the CC 2.

In this embodiment of this application, lengths of a TTI and a subframe in a same carrier are the same, that is, a length of a subframe is a length of a TTI. However, a TTI is a concept of a scheduling layer, and the base station and the user equipment arrange data transmission by using the TTI as a unit. A subframe is a concept of a physical layer, and the physical layer arranges baseband and radio frequency processing behaviors by using the subframe as a unit. In an existing LTE system, the TTI and the subframe are equivalent in a time length. However, during actual operation, the two concepts do not need to be equivalent. For example, one TTI may include a plurality of subframes. In this case, a MAC layer arranges transmission by using the TTI as a unit, but the physical layer performs processing by using the subframe as a unit. In this case, in this embodiment of this application, only a TTI of a subframe in which a resource block is located needs to be indicated.

To resolve the foregoing problems, an embodiment of this application provides a cross-carrier scheduling method. Detailed descriptions are provided below.

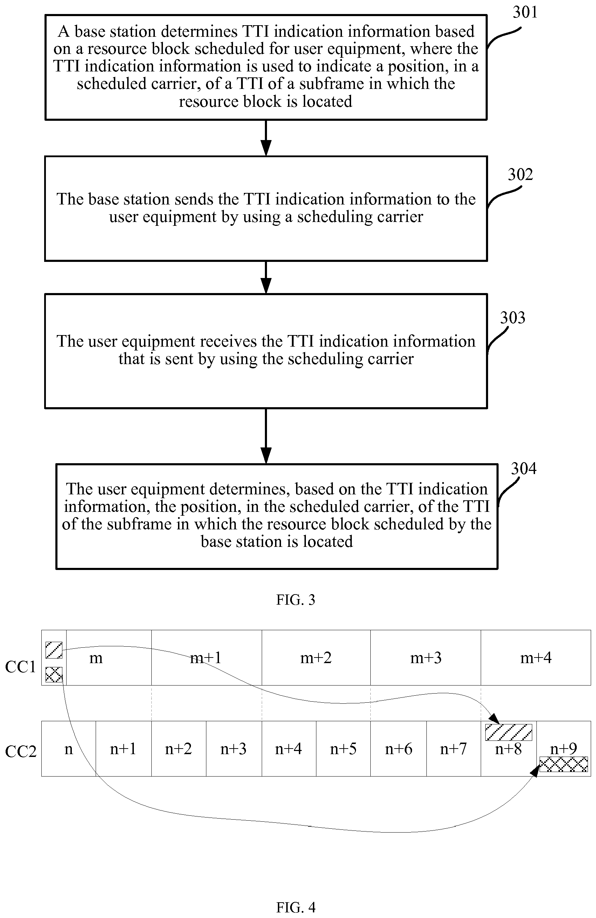

Based on the foregoing descriptions, as shown in FIG. 3, FIG. 3 is a schematic flowchart of a cross-carrier scheduling method according to an embodiment of this application. The method includes the following steps.

Step 301: A base station determines TTI indication information based on a resource block scheduled for user equipment, where the TTI indication information is used to indicate a position, in a scheduled carrier, of a TTI of a subframe in which the resource block is located.

In this embodiment of this application, a scheduling carrier may be a carrier that is used to schedule a resource block in another carrier (for example, a secondary carrier) for the user equipment. The scheduled carrier may be a carrier whose resource block is scheduled by using another carrier (for example, a primary carrier), and may be a secondary carrier.

In step 301, the resource block scheduled by the base station for the user equipment may be an uplink resource block, or may be a downlink resource block. In addition, a range of a band of the scheduled carrier is not limited, and the scheduled carrier may be a carrier in an unlicensed band, or the scheduled carrier may be a carrier in a licensed band. The licensed band herein is a band that is used during communication between an access network (for example, the foregoing base station) and user equipment and that is granted by a country, a region, or an organization to a telecommunications operator when the telecommunications operator provides a communications service such as mobile and Internet access for the user equipment, for example, bands used by various wireless access standards such as LTE, UTRAN, and GERAN. The unlicensed band is a band other than the foregoing licensed band, and commonly includes bands used in a wireless local area network that uses a wireless fidelity (wireless fidelity, Wi-Fi) technology, a broadcast television signal, satellite communications, or the like.

This embodiment of this application may be applied to cases in which a TTI corresponding to the scheduled carrier is shorter than a TTI corresponding to the scheduling carrier, a TTI corresponding to the scheduled carrier is equal to a TTI corresponding to the scheduling carrier, a TTI corresponding to the scheduled carrier is longer than a TTI corresponding to the scheduling carrier, or the like. An example in which the TTI corresponding to the scheduled carrier is shorter than the TTI corresponding to the scheduling carrier is used below for description. For the other cases, refer to the descriptions in this embodiment of this application, and details are not described herein again.

After determining the resource block scheduled for the user equipment, the base station may determine the TTI indication information, to indicate the position, in the scheduled carrier, of the TTI of the subframe in which the resource block scheduled for the user equipment is located.

In this embodiment of this application, the TTI indication information determined by the base station may be used to indicate a position, in N TTIs, of the TTI of the subframe in which the resource block is located, the N TTIs may be TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer.

Optionally, the TTI indication information may be K TTI identifiers, each TTI identifier indicates a position of one TTI in the N TTIs, and K is a positive integer. A correspondence between a TTI identifier and a position of a TTI in the N TTIs may be pre-agreed on by the base station and the user equipment. K is less than or equal to N.

The base station may send the correspondence between the TTI identifier and the position of the TTI in the N TTIs to the user equipment by using RRC (Radio Resource Control, Radio Resource Control) signaling. Certainly, the base station may send the correspondence between the TTI identifier and the position of the TTI in the N TTIs to the user equipment at the same time when sending the TTI indication information. This is not limited in this embodiment of this application.

For example, with reference to FIG. 2, N is 2 in this case. The resource block scheduled by the base station for the user equipment is located in the TTI 1 in the CC 2. A TTI identifier of the TTI 1 in the CC 2 may be 0, and a TTI identifier of the TTI 2 in the CC 2 may be 1. In this case, the TTI indication information may be 0. After determining that the received TTI indication information is 0, the user equipment may determine that the resource block is located in the TTI 1 in the CC 2. Certainly, the TTI identifier of the TTI 1 may alternatively be 1, and the TTI identifier of the TTI 2 may alternatively be 0, provided that a TTI identifier can uniquely identify a TTI. A specific value of the TTI identifier is not limited in this embodiment of this application.

Further, in this embodiment of this application, for specific user equipment, the base station can ensure that data of the user equipment can be sent only in some of the N TTIs, and therefore a TTI identifier in TTI indication information for the user equipment only needs to point to a TTI available for the user equipment. For example, one TTI of 1 ms in a scheduling carrier corresponds to 10 TTIs of 0.1 ms each in a scheduled carrier. According to a time sequence of the TTIs, TTI identifiers of the 10 TTIs of 0.1 ms each may be respectively 0 to 9. However, for particular user equipment, data of the user equipment can appear only in the TTI whose TTI identifier is 0 and the TTI whose TTI identifier is 4, and therefore for the user equipment, the TTI whose TTI identifier is 0 may represent the first TTI, and the TTI whose TTI identifier is 1 may represent the fifth TTI, that is, the TTI whose TTI identifier is 4 and that is described above.

The TTI indication information may alternatively be a resource block number of the resource block, to indicate the position of the TTI of the subframe in which the resource block is located. One subframe includes a plurality of resource blocks, and numbers that are set for the resource blocks may be used as resource block numbers of the resource blocks. For example, with reference to FIG. 2, resource block numbers of the resource blocks included in the TTI 1 in the CC 2 are from 0 to 49, and resource block numbers of the resource blocks included in the TTI 2 are from 50 to 99. The TTI indication information may be a resource block number of the resource block. When the base station schedules a resource block whose resource block number is from 21 to 40 in a primary TTI 1 by using the PDCCH in the CC 1, when determining, based on the TTI indication information, that the resource block scheduled by the base station for the user equipment is the resource block whose resource block number is from 21 to 40, the user equipment may determine that the resource block is located in the TTI 1 in the CC 2. Correspondingly, when the base station schedules a resource block whose resource block number is from 79 to 99 by using a PDCCH in a primary TTI 2 in the CC 1, when determining, based on the TTI indication information, that the resource block number of the resource block scheduled by the base station for the user equipment is from 79 to 99, the user equipment may determine that the resource block is located in the TTI 2 in the CC 2. Essentially, this identification manner implicitly represents a TTI in which scheduled data is located.

In this embodiment of this application, the TTI indication information may alternatively be a CIF. When the TTI indication information is a CIF, the position, in the scheduled carrier, of the TTI of the subframe in which the resource block scheduled by the base station for the user equipment is located is a preset position. The base station may send the preset position to the user equipment by using the RRC signaling. Certainly, the base station may send the preset position to the user equipment at the same time when sending the TTI indication information. This is not limited in this embodiment of this application.

For example, with reference to FIG. 2, the preset position is the first TTI in the scheduled carrier that corresponds to a primary TTI in the scheduling carrier, that is, the TTI 1. When receiving the CIF, the user equipment may determine that the TTI of the subframe in which the resource block scheduled by the base station for the user equipment is located is the first TTI that corresponds to the primary TTI in the scheduling carrier. Certainly, the preset position may alternatively be the TTI 2.

It should be noted that, in this embodiment of this application, a resource block in a downlink carrier may be scheduled for the user equipment by using the downlink carrier, or a resource block in an uplink carrier may be scheduled for the user equipment by using a downlink carrier.

For example, as shown in FIG. 4, FIG. 4 is a schematic diagram of cross-carrier scheduling according to an embodiment of this application. In FIG. 4, one TTI in a CC 1 is equal to two TTIs in a CC 2. The CC 1 is a downlink carrier, and the CC 2 is an uplink carrier. In FIG. 4, when a resource block in the CC 2 is scheduled by using a PDCCH/an ePDCCH in the CC 1, a base station may indicate, by using TTI indication information, a position, in the CC 2, of a TTI of a subframe in which the resource block scheduled in the CC 2 is located. In FIG. 4, if the scheduled resource block is located in a subframe n+8 in the CC 2, the TTI indication information is indicated by using 0, or if the scheduled resource block is located in a subframe n+9 in the CC 2, the TTI indication information is indicated by using 1. It should be noted that, it is assumed in FIG. 4 that a time difference between scheduling information of the CC 1 and the scheduled resource block in the CC 2 is TTIs corresponding to four CCs 1. During actual operation, the time difference may be any other values, and is not limited herein.

When the base station schedules a resource block in an uplink carrier for user equipment by using a downlink carrier, the base station may schedule uplink data or all possible uplink signaling that is sent by the user equipment by using the resource block. For example, the base station schedules aperiodic CSI (Channel State Information, channel state information), an aperiodic SRS (Sounding Reference Signal, sounding reference signal), or the like that is sent by the user equipment by using the resource block.

Further, when scheduling the uplink data or the uplink signaling that is sent by the user equipment by using the resource block, the base station may further send symbol indication information to the user equipment at the same time, to indicate a position, in the subframe in which the resource block is located, of a symbol carrying the uplink signaling or the uplink data. The symbol indication information may be information such as a position identifier of the symbol. The term "symbol" in this embodiment of this application may be an OFDM symbol when an LTE system is used as an example for description.

Step 302: The base station sends the TTI indication information to the user equipment by using a scheduling carrier.

In step 302, the scheduling carrier may be a carrier in an unlicensed band, or the scheduling carrier may be a carrier in a licensed band. In addition, it should be noted that, in this embodiment of this application, the scheduling carrier may be a primary carrier, and the scheduled carrier may be a secondary carrier.

The base station may send the TTI indication information to the user equipment by using DCI carried in a PDCCH/an ePDCCH in the scheduling carrier.

Step 303: The user equipment receives the TTI indication information that is sent by using the scheduling carrier.

Step 304: The user equipment determines, based on the TTI indication information, the position, in the scheduled carrier, of the TTI of the subframe in which the resource block scheduled by the base station is located.

In step 304, the user equipment may perform blind detection on the PDCCH/ePDCCH in the scheduling carrier, and obtain a CIF in the DCI carried in the PDCCH/ePDCCH, to determine the scheduled carrier. After determining the scheduled carrier, the user equipment determines, based on the TTI indication information, a position, in the scheduled carrier, of the resource block scheduled by the base station for the user equipment, to transmit data or receive data based on the resource block.

When the TTI indication information is K TTI identifiers, the user equipment may determine, in N TTIs based on the K TTI identifiers, K TTIs of the subframe in which the resource block is located. The N TTIs are TTIs in the scheduled carrier that are in a same time period as a primary TTI in the scheduling carrier, and the primary TTI is a TTI of a subframe that is in the scheduling carrier and that is transmitted at the same time with the subframe in which the resource block is located.

It should be noted that, that two subframes are transmitted at the same time may mean that there is a time intersection set between corresponding TTIs of the two subframes. For example, with reference to FIG. 2, the corresponding subframe of the TTI 1 in the CC 1, the corresponding subframe of the TTI 1 in the CC 2, and the corresponding subframe of the TTI 2 in the CC 2 are subframes that are transmitted at the same time.

For example, with reference to FIG. 2, the TTI identifier of the TTI 1 in the CC 2 may be 0, and the TTI identifier of the TTI 2 in the CC 2 may be 1. After determining that received TTI indication information is 0, the user equipment may determine that the resource block is located in the TTI 1 in the CC 2. After determining that received TTI indication information is 1, the user equipment may determine that the resource block is located in the TTI 2 in the CC 2. After determining that received TTI indication information is 01, the user equipment may determine that the resource block is located in the TTI 1 in the CC 2 and in the TTI 2 in the CC 2.

Further, in this embodiment of this application, for specific user equipment, the base station can ensure that data of the user equipment can be sent only in some of the N TTIs, and therefore a TTI identifier in TTI indication information for the user equipment only needs to point to a TTI available for the user equipment. For example, one TTI of 1 ms in a scheduling carrier corresponds to 10 TTIs of 0.1 ms each in a scheduled carrier. The data of the user equipment can appear only in the first TTI and the fifth TTI. The TTI whose TTI identifier is 0 may represent the first TTI, and the TTI whose TTI identifier is 1 may represent the fifth TTI. In this case, after determining that the received TTI indication information is 0, the user equipment may determine that the resource block is located in the TTI 1 in the CC 2. After determining that the received TTI indication information is 1, the user equipment may determine that the resource block is located in the fifth TTI in the CC 2.

When the TTI indication information is a resource block number of a resource block, the user equipment may determine, based on a received resource block number, a position of a TTI of a subframe in which the resource block is located.

For example, with reference to FIG. 2, resource block numbers of the resource blocks included in the TTI 1 in the CC 2 are from 0 to 49, and resource block numbers of the resource blocks included in the TTI 2 are from 50 to 99. When determining, based on the TTI indication information, that a resource block number of the resource block scheduled by the base station for the user equipment is from 21 to 40, the user equipment may determine that the resource block is located in the TTI 1 in the CC 2. When determining, based on the TTI indication information, that a resource block number of the resource block scheduled by the base station for the user equipment is from 79 to 99, the user equipment may determine that the resource block is located in the TTI 2 in the CC 2.

When the TTI indication information is a CIF, the user equipment may determine, based on a preset position, a position, in the scheduled carrier, of the TTI of the subframe in which the resource block scheduled by the base station is located.

For example, with reference to FIG. 2, the preset position is the first TTI in the scheduled carrier that corresponds to a primary TTI in the scheduling carrier, that is, the TTI 1. When receiving the CIF, the user equipment may determine that the TTI of the subframe in which the resource block scheduled by the base station for the user equipment is located is the first TTI that corresponds to the primary TTI in the scheduling carrier. Certainly, the preset position may alternatively be the TTI 2.

In this embodiment of this application, the user equipment may send uplink signaling or uplink data by using the resource block. For example, the user equipment may send the uplink signaling such as aperiodic CSI or an aperiodic SRS by using the resource block.

Further, the user equipment may further determine, based on the symbol indication information sent by the base station, a position, in the subframe in which the resource block is located, of a symbol carrying the uplink signaling or the uplink data.

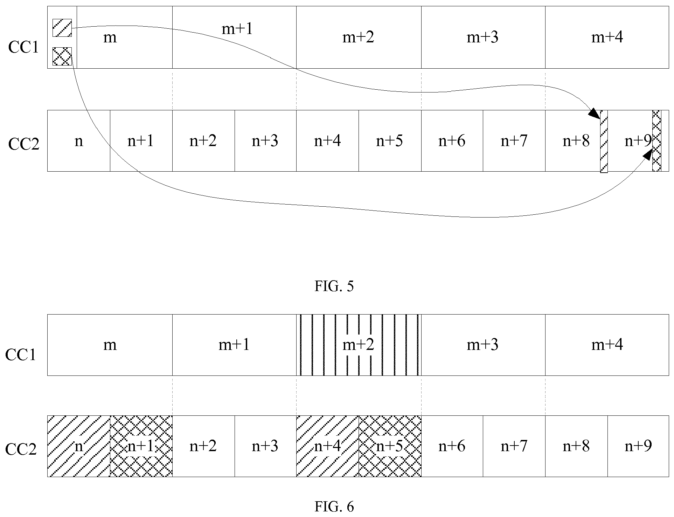

For example, as shown in FIG. 5, FIG. 5 is a schematic diagram of cross-carrier scheduling according to an embodiment of this application. In FIG. 5, a base station indicates, to user equipment by using TTI indication information, that resource blocks are located in a subframe n+8 and a subframe n+9, and indicates, to the user equipment by using symbol indication information, that symbols carrying the uplink signaling or the uplink data are the last symbol of the subframe n+8 and the second last symbol of the subframe n+9.

Further, in this embodiment of this application, when the resource block is an uplink resource block and a scheduled carrier is a carrier in an unlicensed band, the user equipment may further need to determine, based on LBT (listen before talk, listen before talk), whether the resource block is available, and when determining that the resource block is available, send the uplink signaling or the uplink data by using the resource block.

For example, with reference to FIG. 5, a CC 1 is a downlink carrier in a licensed band, and a CC 2 is an uplink carrier in an unlicensed band. The base station indicates, to the user equipment by using the TTI indication information, that a resource block 1 is located in the subframe n+8 and a resource block 2 is located in the subframe n+9. If determining, based on the LBT, that the resource block 1 is available and the resource block 2 is available, the user equipment may send the uplink data or the uplink signaling by using the resource block 1 and the resource block 2. If determining, based on the LBT, that the resource block 1 is unavailable and the resource block 2 is available, the user equipment may send the uplink data or the uplink signaling by using the resource block 2. If determining, based on the LBT, that the resource block 1 is unavailable and the resource block 2 is unavailable, the user equipment does not send the uplink data or the uplink signaling by using the resource block 1 and the resource block 2. It should be noted that, it is assumed herein that a scheduled resource block can appear only once in the scheduled carrier. Actually, the base station may pre-configure a window, and the scheduled resource block may appear in the window for a plurality of times. The user equipment may perform the LBT based on a time sequence, and if the LBT is successfully performed, the user equipment sends the uplink data or the uplink signaling by using the scheduled resource block, or if the LBT is unsuccessfully performed, the user equipment tries to perform the LBT again before a position of a scheduled resource block appears in the window next time until the LBT is successfully performed or until the window ends.

In LTE, a HARQ (Hybrid Automatic Repeat reQuest, hybrid automatic repeat request) technology is used to improve system reliability and reduce an error rate of packet transmission. Using downlink as an example, the user equipment decodes, based on downlink resource allocation information on a PDCCH/an ePDCCH, in a corresponding soft buffer of a designated HARQ process, data in a PDSCH (Physical Downlink Shared Channel, physical downlink shared channel), and generates an uplink HARQ acknowledgement message based on a decoding result. The feedback information is sent to the base station on a PUCCH (Physical Uplink Control Channel, physical uplink control channel) or a PUSCH. The HARQ acknowledgement message may be an ACK (Acknowledge, Acknowledgement)/NACK (Negative Acknowledge, negative acknowledgement). The base station determines, based on the received HARQ acknowledgement message, whether to perform HARQ retransmission or send new data.

In a carrier aggregation technology, when a HARQ and CSI are fed back, HARQ acknowledgement messages and CSI of a plurality of carriers may be fed back on one carrier. However, because TTIs of the carriers are the same, and the carries are completely synchronized, a mapping relationship on time domain resources is a one-to-one correspondence. During carrier aggregation, if TTIs of a primary carrier and a secondary carrier are different, the mapping relationship on the time domain resources may be not a one-to-one correspondence. For example, as shown in FIG. 6, FIG. 6 is a schematic diagram of cross-carrier scheduling according to an embodiment of the present invention. In FIG. 6, a primary carrier is a CC 1, and a secondary carrier is a CC 2. Resource blocks that are scheduled by a base station for user equipment by using the primary carrier are located in a subframe n and a subframe n+1 in the CC 2. Based on a rule of a HARQ feedback window, the user equipment needs to feed back, at the same time in a subframe m+2 in the CC 1, receiving statuses of downlink data that is received by using the resource blocks in the subframe n and the subframe n+1. Based on an existing feedback method, the base station cannot distinguish whether a received feedback is for the downlink data in the subframe n or for the downlink data in the subframe n+1.

To resolve the foregoing problems, an embodiment of this application provides a feedback method. Detailed descriptions are provided below.

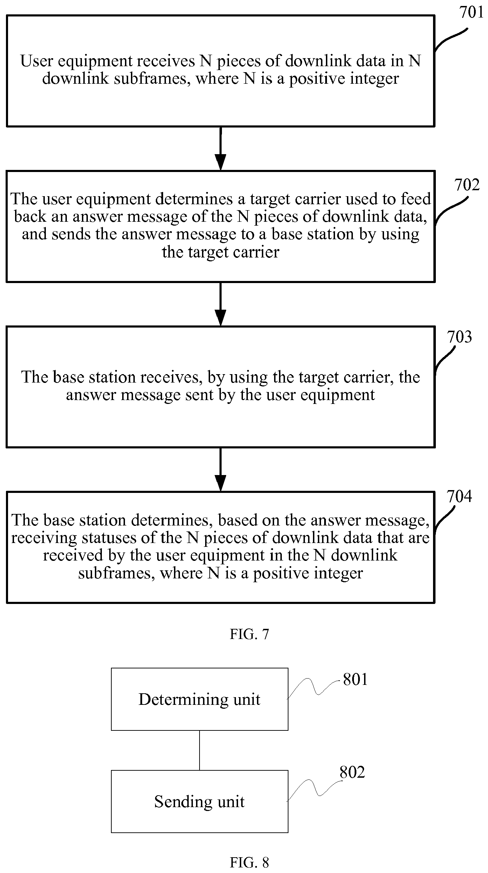

Based on the foregoing descriptions, as shown in FIG. 7, FIG. 7 is a schematic flowchart of a feedback method according to an embodiment of this application. The method includes the following steps.

Step 701: User equipment receives N pieces of downlink data in N downlink subframes, where N is a positive integer.

Step 702: The user equipment determines a target carrier used to feed back an answer message of the N pieces of downlink data, and sends the answer message to a base station by using the target carrier.

In step 701, the N downlink subframes may be N downlink subframes in a secondary carrier.

In step 702, after receiving the N pieces of downlink data, the user equipment may generate an answer message based on receiving statuses of the N pieces of downlink data. The receiving status may be correct receiving or incorrect receiving.

In this embodiment of this application, the answer message generated by the user equipment may include N HARQ acknowledgement messages and N pieces of subframe position indication information. Each HARQ acknowledgement message corresponds to one piece of subframe position indication information. For any one of the N HARQ acknowledgement messages, the HARQ acknowledgement message is used to indicate a receiving status of downlink data carried in a downlink subframe indicated by the subframe position indication information corresponding to the HARQ acknowledgement message. Each HARQ acknowledgement message may be an ACK or a NACK, and whether a HARQ acknowledgement message is an ACK or a NACK may be specifically determined based on a receiving status of downlink data corresponding to the HARQ acknowledgement message.

In this embodiment of this application, the subframe position indication information may be a downlink subframe identifier, and the downlink subframe identifier indicates a position of a subframe in a carrier, where the subframe corresponds to the downlink subframe identifier.

For example, with reference to FIG. 6, downlink subframe identifiers of a subframe n to a subframe n+9 in a CC 2 may be from 0 to 9. When the user equipment feeds back a receiving status of downlink data carried in the subframe n+1, a sent downlink subframe identifier may be 1.

Further, in this embodiment of this application, for specific user equipment, the base station can ensure that data of the user equipment can be sent only in some subframes in a carrier, and therefore a subframe identifier in subframe position indication information for the user equipment only needs to point to a subframe available for the user equipment. For example, one TTI of 1 ms in a primary carrier corresponds to 10 TTIs of 0.1 ms each in a secondary carrier, that is, a transmission time length of one subframe in the primary carrier is equal to transmission time lengths of 10 subframes in the secondary carrier. The data of the user equipment can appear only in the first subframe and the fifth subframe. In this case, a TTI whose TTI identifier is 0 may represent the first subframe, and a TTI whose TTI identifier is 1 may represent the fifth subframe.

Further, a correspondence between a downlink subframe identifier and a position of a downlink subframe in a carrier may be sent by the base station to the user equipment by using RRC signaling. Certainly, the correspondence may be sent by the base station to the user equipment at the same time when the downlink data is sent.

The subframe position indication information may alternatively be a resource block number of a resource block carrying the downlink data. For example, with reference to FIG. 6, resource block numbers of the resource blocks included in the subframe n in the CC 2 are from 0 to 49, and resource block numbers of the resource blocks included in the subframe n+1 are from 50 to 99. The user equipment receives downlink data on the resource block whose number is from 21 to 40 in the subframe n. In this case, the subframe position indication information determined by the user equipment may be resource block numbers of resource blocks on which the downlink data is received.

Optionally, the answer message may be obtained by the user equipment by performing a logical AND operation on the N HARQ acknowledgement messages corresponding to the N pieces of downlink data. In this case, the answer message is an ACK only when all of the N pieces of downlink data are correctly received. When any one of the N pieces of downlink data is incorrectly received, the answer message is a NACK. In this case, the base station needs to retransmit all of the N pieces of downlink data.

In this method, data streams transmitted by using the answer message can be reduced, thereby reducing system load.

For example, with reference to FIG. 6, in FIG. 6, if the user equipment correctly receives downlink data in the subframe n, and correctly receives downlink data in the subframe n+1, a generated answer message is an ACK. After receiving the answer message, if determining that the answer message is an ACK, the base station determines that the user equipment correctly receives the downlink data in both the subframe n and the subframe n+1. If the user equipment correctly receives downlink data in the subframe n, and incorrectly receives downlink data in the subframe n+1, a generated answer message is a NACK. After receiving the answer message, if determining that the answer message is a NACK, the base station determines that the user equipment incorrectly receives the downlink data. If the user equipment incorrectly receives downlink data in the subframe n, and correctly receives downlink data in the subframe n+1, a generated answer message is a NACK. After receiving the answer message, if determining that the answer message is a NACK, the base station determines that the user equipment incorrectly receives the downlink data. If the user equipment incorrectly receives downlink data in the subframe n, and incorrectly receives downlink data in the subframe n+1, a generated answer message is a NACK. After receiving the answer message, if determining that the answer message is a NACK, the base station determines that the user equipment incorrectly receives the downlink data.

In this embodiment of this application, when determining that the target carrier of the answer message is to be sent, the user equipment may determine the primary carrier as the target carrier, or may determine the secondary carrier as the target carrier.

Further, the user equipment may determine a component carrier having a shortest TTI in available component carriers, and determine a component carrier having a smallest carrier number identifier in the component carrier having the shortest TTI, as the target carrier used to feed back the answer message of the N pieces of downlink data.

It should be noted that, in this embodiment of this application, if determining that a PUSCH is not to be transmitted, the user equipment determines a carrier used for transmitting a PUCCH as an available component carrier, or if determining that a PUSCH is to be transmitted, the user equipment determines a carrier used for transmitting a PUSCH as an available component carrier.

Step 703: The base station receives, by using the target carrier, the answer message sent by the user equipment.

Step 704: The base station determines, based on the answer message, receiving statuses of the N pieces of downlink data that are received by the user equipment in the N downlink subframes, where N is a positive integer.

In step 704, the base station determines to retransmit the downlink data or send new downlink data based on the received answer message.

When the answer message includes N HARQ acknowledgement messages and N pieces of subframe position indication information, if a HARQ acknowledgement message received by the base station is a NACK, downlink data carried in a downlink subframe indicated by subframe position indication information corresponding to the HARQ acknowledgement message is retransmitted.

When the answer message is obtained by the user equipment by performing a logical AND operation on the N HARQ acknowledgement messages corresponding to the N pieces of downlink data, if determining that the answer message is a NACK, the base station re-sends the N pieces of downlink data to the user equipment. If determining that the answer message is an ACK, the base station may send new downlink data to the user equipment.

In the foregoing examples, it is assumed that the scheduling carrier and the scheduled carrier use TTIs of different lengths and work in a cross-carrier scheduling scenario. Actually, the foregoing conditions may be extended. For example, in a same cell, TTIs of different lengths are used for working in different time periods. For example, in a time period of 0 to T1, a TTI of 1 ms is used, to send a scheduling indication and notify the UE that a resource block of the downlink data is in a time period of T2 to T3 or notify the user equipment that a resource block of the uplink data is in a time period of T2 to T3. In the time period of T2 to T3, a TTI of 0.1 ms is used. In this case, the method provided in this embodiment of this application may also be used, to specifically indicate a TTI of 0.1 ms in the range of T2 to T3.

Based on the same concept, an embodiment of the present invention provides a carrier scheduling apparatus, configured to perform the foregoing method procedure.

As shown in FIG. 8, FIG. 8 is a schematic structural diagram of a carrier scheduling apparatus according to an embodiment of this application.

Referring to FIG. 8, the apparatus includes:
a determining unit 801, configured to determine transmission time interval TTI indication information based on a resource block scheduled for user equipment, where the TTI indication information is used to indicate a position, in a scheduled carrier, of a TTI of a subframe in which the resource block is located; and
a sending unit 802, configured to send the TTI indication information to the user equipment by using a scheduling carrier.

Optionally, a TTI corresponding to the scheduled carrier is shorter than a TTI corresponding to the scheduling carrier.

Optionally, the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer.

Optionally, the TTI indication information is K TTI identifiers, each TTI identifier indicates a position of one TTI in the N TTIs, and K is a positive integer.

Optionally, a correspondence between a TTI identifier and a position of a TTI in the N TTIs is sent by the base station to the user equipment by using Radio Resource Control RRC signaling.

Optionally, the TTI indication information is a resource block number of the resource block.

Optionally, the TTI indication information is a carrier indicator field CIF, used to indicate that the position, in the scheduled carrier, of the TTI of the subframe in which the resource block is located, is a preset position.

Optionally, the resource block is used to carry uplink signaling or uplink data sent by the user equipment.

Optionally, the sending unit 802 is further configured to:
send symbol indication information to the user equipment, where the symbol indication information is used to indicate a position, in the subframe in which the resource block is located, of a symbol carrying the uplink signaling or the uplink data.

Optionally, the scheduled carrier is a carrier in an unlicensed band, or the scheduled carrier is a carrier in a licensed band; and
the scheduling carrier is a carrier in an unlicensed band, or the scheduling carrier is a carrier in a licensed band.

Based on the same concept, an embodiment of the present invention provides a carrier scheduling apparatus, configured to perform the foregoing method procedure.

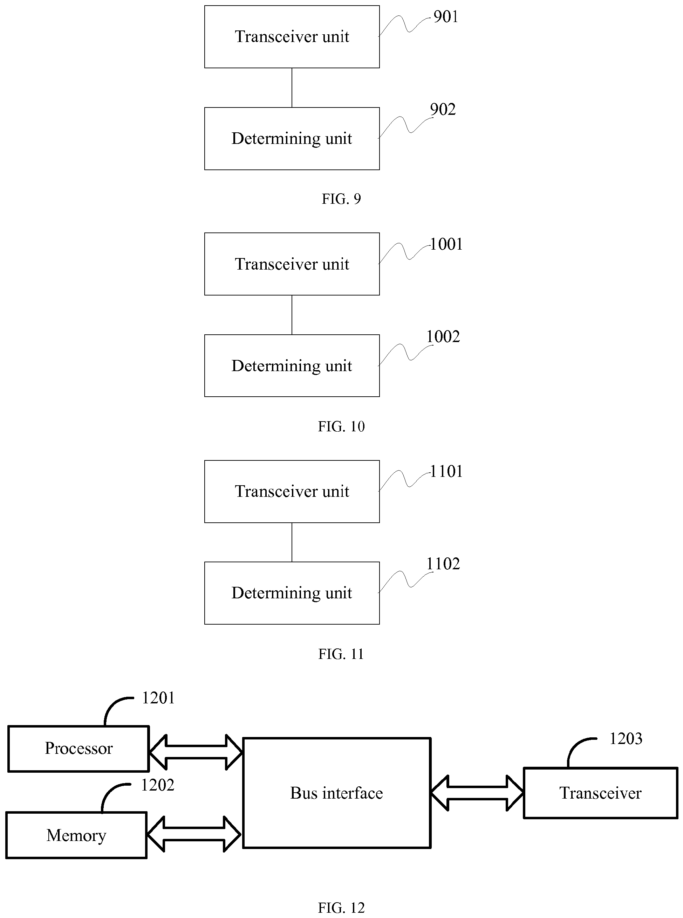

As shown in FIG. 9, FIG. 9 is a schematic structural diagram of a carrier scheduling apparatus according to an embodiment of this application.

Referring to FIG. 9, the apparatus includes:
a transceiver unit 901, configured to receive transmission time interval TTI indication information that is sent by using a scheduling carrier; and
a determining unit 902, configured to determine, based on the TTI indication information, a position, in a scheduled carrier, of a TTI of a subframe in which a resource block scheduled by a base station is located.

Optionally, a TTI corresponding to the scheduled carrier is shorter than a TTI corresponding to the scheduling carrier.

Optionally, the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer.

Optionally, the TTI indication information is K TTI identifiers, each TTI identifier indicates a position of one TTI in the N TTIs, and K is a positive integer.

Optionally, a correspondence between a TTI identifier and a position of a TTI in the N TTIs is sent by the base station to the user equipment by using Radio Resource Control RRC signaling.

Optionally, the TTI indication information is a resource block number of the resource block.

Optionally, the TTI indication information is a carrier indicator field CIF, used to indicate that the position, in the scheduled carrier, of the TTI of the subframe in which the resource block is located, is a preset position.

Optionally, the transceiver unit 901 is specifically configured to:
send uplink signaling or uplink data by using the resource block.

Optionally, the transceiver unit 901 is further configured to:
receive symbol indication information sent by the base station, where the symbol indication information is used to indicate a position, in the subframe in which the resource block is located, of a symbol carrying the uplink signaling or the uplink data.

Optionally, the transceiver unit 901 is further configured to:
determine, based on listen before talk LBT, that the resource block is available.

Optionally, the scheduled carrier is a carrier in an unlicensed band, or the scheduled carrier is a carrier in a licensed band; and
the scheduling carrier is a carrier in an unlicensed band, or the scheduling carrier is a carrier in a licensed band.

Based on the same concept, an embodiment of the present invention provides a feedback apparatus, configured to perform the foregoing method procedure.

As shown in FIG. 10, FIG. 10 is a schematic structural diagram of a feedback apparatus according to an embodiment of this application.

Referring to FIG. 10, the apparatus includes:
a transceiver unit 1001, configured to receive N pieces of downlink data in N downlink subframes, where N is a positive integer; and
a determining unit 1002, configured to determine a target carrier used to feed back an answer message of the N pieces of downlink data, where
the transceiver unit 1001 is configured to send the answer message to a base station by using the target carrier.

Optionally, the determining unit 1002 is specifically configured to:
determine a component carrier having a shortest transmission time interval TTI in available component carriers, and determine a component carrier having a smallest carrier number identifier in the component carrier having the shortest TTI, as the target carrier used to feed back the answer message of the N pieces of downlink data.

Optionally, the determining unit 1002 is specifically configured to:
if it is determined that a physical uplink shared channel PUSCH is not to be transmitted, the available component carrier is a carrier in which a physical uplink control channel PUCCH is located; or
if it is determined that a PUSCH is to be transmitted, the available component carrier is a carrier in which the PUSCH is located.

Optionally, the answer message includes N hybrid automatic repeat request HARQ acknowledgement messages and N pieces of subframe position indication information corresponding to the N HARQ acknowledgement messages.

For any one of the N HARQ acknowledgement messages, the HARQ acknowledgement message is used to indicate a receiving status of downlink data carried in a downlink subframe indicated by the subframe position indication information corresponding to the HARQ acknowledgement message.

Optionally, the subframe position indication information is a downlink subframe identifier.

Optionally, a correspondence between a downlink subframe identifier and a position of a downlink subframe in a carrier is sent by the base station to the user equipment by using Radio Resource Control RRC signaling.

Optionally, the answer message is obtained by the user equipment by performing a logical AND operation on the N HARQ acknowledgement messages corresponding to the N pieces of downlink data.

Based on the same concept, an embodiment of the present invention provides a feedback apparatus, configured to perform the foregoing method procedure.

As shown in FIG. 11, FIG. 11 is a schematic structural diagram of a feedback apparatus according to an embodiment of this application.

Referring to FIG. 11, the apparatus includes:
a transceiver unit 1101, configured to receive, by using a target carrier, an answer message sent by user equipment; and
a determining unit 1102, configured to determine, based on the answer message, receiving statuses of N pieces of downlink data that are received by the user equipment in N downlink subframes, where N is a positive integer.

Optionally, the answer message includes N hybrid automatic repeat request HARQ acknowledgement messages and N pieces of subframe position indication information corresponding to the N HARQ acknowledgement messages.

For any one of the N HARQ acknowledgement messages, the HARQ acknowledgement message is used to indicate a receiving status of downlink data carried in a downlink subframe indicated by the subframe position indication information corresponding to the HARQ acknowledgement message.

Optionally, the answer message is obtained by the user equipment by performing a logical AND operation on the N HARQ acknowledgement messages corresponding to the N pieces of downlink data.

Optionally, the transceiver unit 1101 is further configured to:
if it is determined that the answer message is a negative acknowledgement NACK, re-send the N pieces of downlink data to the user equipment.

Based on the same concept, an embodiment of the present invention provides a carrier scheduling apparatus, configured to perform the foregoing method procedure.

As shown in FIG. 12, FIG. 12 is a schematic structural diagram of a carrier scheduling apparatus according to an embodiment of this application.

Referring to FIG. 12, the apparatus includes a processor 1201, a memory 1202, and a transceiver 1203.

The processor 1201 is configured to read a program stored in the memory 1202, to perform the following procedure:
determining transmission time interval TTI indication information based on a resource block scheduled for user equipment, where the TTI indication information is used to indicate a position, in a scheduled carrier, of a TTI of a subframe in which the resource block is located.

The transceiver 1203 is configured to send the TTI indication information to the user equipment by using a scheduling carrier.

Optionally, a TTI corresponding to the scheduled carrier is shorter than a TTI corresponding to the scheduling carrier.

Optionally, the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer.

Optionally, the TTI indication information is K TTI identifiers, each TTI identifier indicates a position of one TTI in the N TTIs, and K is a positive integer.

Optionally, a correspondence between a TTI identifier and a position of a TTI in the N TTIs is sent by the base station to the user equipment by using Radio Resource Control RRC signaling.

Optionally, the TTI indication information is a resource block number of the resource block.

Optionally, the TTI indication information is a carrier indicator field CIF, used to indicate that the position, in the scheduled carrier, of the TTI of the subframe in which the resource block is located, is a preset position.

Optionally, the resource block is used to carry uplink signaling or uplink data sent by the user equipment.

Optionally, the transceiver 1203 is further configured to:
send symbol indication information to the user equipment, where the symbol indication information is used to indicate a position, in the subframe in which the resource block is located, of a symbol carrying the uplink signaling or the uplink data.

Optionally, the scheduled carrier is a carrier in an unlicensed band, or the scheduled carrier is a carrier in a licensed band; and
the scheduling carrier is a carrier in an unlicensed band, or the scheduling carrier is a carrier in a licensed band.

FIG. 12 may further include a bus interface. The bus interface may include any quantity of interconnected buses and bridges. Specifically, the buses and the bridges link various circuits of one or more processors represented by the processor and a memory represented by the memory. The bus interface may further link various other circuits of a peripheral device, a voltage stabilizer, a power management circuit, and the like. These are known in the art. Therefore, no details are further described in this specification. The bus interface provides an interface. The transceiver provides a unit configured to communicate with various other devices by using a transmission medium. The processor is responsible for bus architecture management and general processing. The memory may store data used by the processor when the processor performs an operation.

Based on the same concept, an embodiment of the present invention provides a carrier scheduling apparatus, configured to perform the foregoing method procedure.

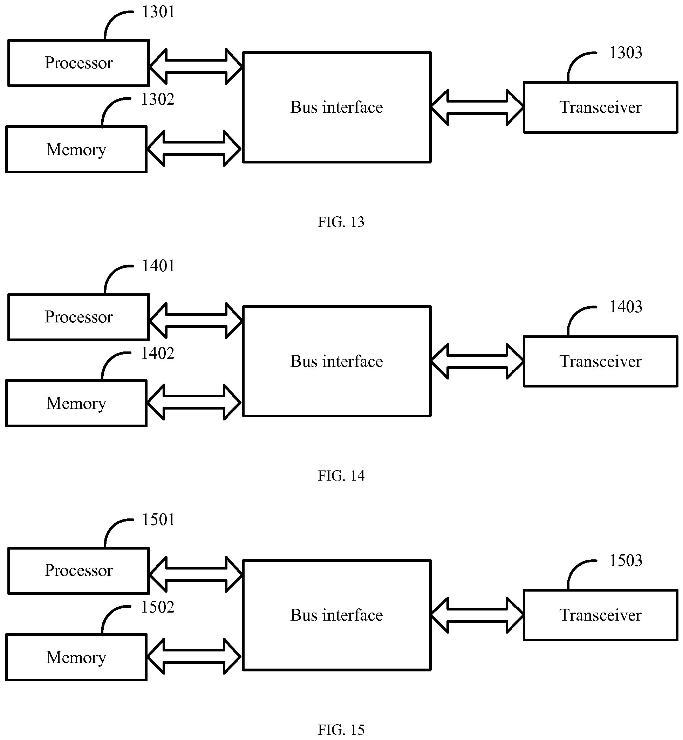

As shown in FIG. 13, FIG. 13 is a schematic structural diagram of a carrier scheduling apparatus according to an embodiment of this application.

Referring to FIG. 13, the apparatus includes a processor 1301, a memory 1302, and a transceiver 1303.

The transceiver 1303 is configured to receive transmission time interval TTI indication information that is sent by using a scheduling carrier.

The processor 1301 is configured to read a program stored in the memory 1302, to perform the following procedure:
determining, based on the TTI indication information, a position, in a scheduled carrier, of a TTI of a subframe in which a resource block scheduled by a base station is located.

Optionally, a TTI corresponding to the scheduled carrier is shorter than a TTI corresponding to the scheduling carrier.

Optionally, the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer.

Optionally, the TTI indication information is K TTI identifiers, each TTI identifier indicates a position of one TTI in the N TTIs, and K is a positive integer.

Optionally, a correspondence between a TTI identifier and a position of a TTI in the N TTIs is sent by the base station to the user equipment by using Radio Resource Control RRC signaling.

Optionally, the TTI indication information is a resource block number of the resource block.

Optionally, the TTI indication information is a carrier indicator field CIF, used to indicate that the position, in the scheduled carrier, of the TTI of the subframe in which the resource block is located, is a preset position.

Optionally, the transceiver 1303 is further configured to:
send uplink signaling or uplink data by using the resource block.

Optionally, the transceiver 1303 is further configured to:
receive symbol indication information sent by the base station, where the symbol indication information is used to indicate a position, in the subframe in which the resource block is located, of a symbol carrying the uplink signaling or the uplink data.

Optionally, the transceiver 1303 is further configured to:
determine, based on listen before talk LBT, that the resource block is available.

Optionally, the scheduled carrier is a carrier in an unlicensed band, or the scheduled carrier is a carrier in a licensed band; and
the scheduling carrier is a carrier in an unlicensed band, or the scheduling carrier is a carrier in a licensed band.

FIG. 13 may further include a bus interface. The bus interface may include any quantity of interconnected buses and bridges. Specifically, the buses and the bridges link various circuits of one or more processors represented by the processor and a memory represented by the memory. The bus interface may further link various other circuits of a peripheral device, a voltage stabilizer, a power management circuit, and the like. These are known in the art. Therefore, no details are further described in this specification. The bus interface provides an interface. The transceiver provides a unit configured to communicate with various other devices by using a transmission medium. The processor is responsible for bus architecture management and general processing. The memory may store data used by the processor when the processor performs an operation.

Based on the same concept, an embodiment of the present invention provides a feedback apparatus, configured to perform the foregoing method procedure.

As shown in FIG. 14, FIG. 14 is a schematic structural diagram of a feedback apparatus according to an embodiment of this application.

Referring to FIG. 14, the apparatus includes a processor 1401, a memory 1402, and a transceiver 1403.

The transceiver 1403 is configured to receive N pieces of downlink data in N downlink subframes, where N is a positive integer.

The processor 1401 is configured to read a program stored in the memory 1402, to perform the following procedure:
determining a target carrier used to feed back an answer message of the N pieces of downlink data, and sending the answer message to a base station by using the target carrier.

Optionally, the processor 1401 is specifically configured to:
determine a component carrier having a shortest transmission time interval TTI in available component carriers, and determine a component carrier having a smallest carrier number identifier in the component carrier having the shortest TTI, as the target carrier used to feed back the answer message of the N pieces of downlink data.

Optionally, the processor 1401 is specifically configured to:
if it is determined that a physical uplink shared channel PUSCH is not to be transmitted, the available component carrier is a carrier in which a physical uplink control channel PUCCH is located; or
if it is determined that a PUSCH is to be transmitted, the available component carrier is a carrier in which the PUSCH is located.

Optionally, the answer message includes N hybrid automatic repeat request HARQ acknowledgement messages and N pieces of subframe position indication information corresponding to the N HARQ acknowledgement messages.

For any one of the N HARQ acknowledgement messages, the HARQ acknowledgement message is used to indicate a receiving status of downlink data carried in a downlink subframe indicated by the subframe position indication information corresponding to the HARQ acknowledgement message.

Optionally, the subframe position indication information is a downlink subframe identifier.

Optionally, a correspondence between a downlink subframe identifier and a position of a downlink subframe in a carrier is sent by the base station to the user equipment by using Radio Resource Control RRC signaling.

Optionally, the answer message is obtained by the user equipment by performing a logical AND operation on the N HARQ acknowledgement messages corresponding to the N pieces of downlink data.

FIG. 14 may further include a bus interface. The bus interface may include any quantity of interconnected buses and bridges. Specifically, the buses and the bridges link various circuits of one or more processors represented by the processor and a memory represented by the memory. The bus interface may further link various other circuits of a peripheral device, a voltage stabilizer, a power management circuit, and the like. These are known in the art. Therefore, no details are further described in this specification. The bus interface provides an interface. The transceiver provides a unit configured to communicate with various other devices by using a transmission medium. The processor is responsible for bus architecture management and general processing. The memory may store data used by the processor when the processor performs an operation.

Based on the same concept, an embodiment of the present invention provides a feedback apparatus, configured to perform the foregoing method procedure.

As shown in FIG. 15, FIG. 15 is a schematic structural diagram of a feedback apparatus according to an embodiment of this application.

Referring to FIG. 15, the apparatus includes: a processor 1501, a memory 1502, and a transceiver 1503.

The transceiver 1503 is configured to receive, by using a target carrier, an answer message sent by user equipment.

The processor 1501 is configured to read a program stored in the memory 1502, to perform the following procedure:
determining, based on the answer message, receiving statuses of N pieces of downlink data that are received by the user equipment in N downlink subframes, where N is a positive integer.

Optionally, the answer message includes N hybrid automatic repeat request HARQ acknowledgement messages and N pieces of subframe position indication information corresponding to the N HARQ acknowledgement messages.

For any one of the N HARQ acknowledgement messages, the HARQ acknowledgement message is used to indicate a receiving status of downlink data carried in a downlink subframe indicated by the subframe position indication information corresponding to the HARQ acknowledgement message.

Optionally, the answer message is obtained by the user equipment by performing a logical AND operation on the N HARQ acknowledgement messages corresponding to the N pieces of downlink data.

Optionally, the transceiver 1503 is further configured to:
if the answer message is a negative acknowledgement NACK, re-send the N pieces of downlink data to the user equipment.

FIG. 15 may further include a bus interface. The bus interface may include any quantity of interconnected buses and bridges. Specifically, the buses and the bridges link various circuits of one or more processors represented by the processor and a memory represented by the memory. The bus interface may further link various other circuits of a peripheral device, a voltage stabilizer, a power management circuit, and the like. These are known in the art. Therefore, no details are further described in this specification. The bus interface provides an interface. The transceiver provides a unit configured to communicate with various other devices by using a transmission medium. The processor is responsible for bus architecture management and general processing. The memory may store data used by the processor when the processor performs an operation.

Persons skilled in the art should understand that the embodiments of this application may be provided as a method or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate a device for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction device. The instruction device implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A carrier scheduling method, comprising:
determining(301), by a base station, transmission time interval, TTI, indication information based on a resource block scheduled for user equipment, wherein the TTI indication information is used to indicate a position, in a scheduled carrier, of a TTI of a subframe in which the resource block is located; and
sending(302), by the base station, the TTI indication information to the user equipment by using a scheduling carrier,
wherein the scheduled carrier is the carrier whose resource block is scheduled by using the scheduling carrier,
and the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer greater than 1, wherein the TTI indication information is a resource block number of the resource block..

2. A carrier scheduling method, comprising:
receiving(303), by user equipment, transmission time interval, TTI, indication information that is sent by using a scheduling carrier; and
determining(304), by the user equipment based on the TTI indication information, a position, in a scheduled carrier, of a TTI of a subframe in which a resource block scheduled by a base station is located,
wherein the scheduled carrier is the carrier whose resource block is scheduled by using the scheduling carrier,
and the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer great than 1, wherein the TTI indication information is a resource block number of the resource block..

3. A carrier scheduling apparatus, comprising:
a determining unit(801), configured to determine transmission time interval, TTI, indication information based on a resource block scheduled for user equipment, wherein the TTI indication information is used to indicate a position, in a scheduled carrier, of a TTI of a subframe in which the resource block is located; and
a sending unit(802), configured to send the TTI indication information to the user equipment by using a scheduling carrier,
wherein the scheduled carrier is the carrier whose resource block is scheduled by using the scheduling carrier,
and the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer greater than 1, wherein the TTI indication information is a resource block number of the resource block..

4. A carrier scheduling apparatus, comprising:
a transceiver unit(901), configured to receive transmission time interval, TTI, indication information that is sent by using a scheduling carrier; and
a determining unit(902), configured to determine, based on the TTI indication information, a position, in a scheduled carrier, of a TTI of a subframe in which a resource block scheduled by a base station is located,
wherein the scheduled carrier is the carrier whose resource block is scheduled by using the scheduling carrier,
and wherein the TTI indication information is used to indicate a position, in N TTIs, of the TTI of the subframe in which the resource block is located, the N TTIs are TTIs in the scheduled carrier that are in a same time period as a primary TTI in the scheduling carrier, the primary TTI is a TTI of a subframe that is in the scheduling carrier and that is transmitted at the same time with the subframe in which the resource block is located, and N is a positive integer great than 1, wherein the TTI indication information is a resource block number of the resource block..

## Patentansprüche

1. Trägerplanungsverfahren, das Folgendes umfasst:
Bestimmen (301), durch eine Basisstation, der Übertragungszeitintervall(transmission *time interval -* TTI)-Anzeigeinformationen, basierend auf einem für eine Benutzereinrichtung geplanten Ressourcenblock, wobei die TTI-Anzeigeinformationen verwendet werden, um in einem geplanten Träger eine Position eines TTI eines Unterrahmens anzuzeigen, in dem sich der Ressourcenblock befindet, und
Senden (302), durch die Basisstation, der TTI-Anzeigeinformationen an die Benutzereinrichtung durch Verwenden eines Planungsträgers,
wobei der geplante Träger der Träger ist, dessen Ressourcenblock unter Verwendung des Planungsträgers geplant ist,
und die TTI-Anzeigeinformationen verwendet werden, um in N TTIs eine Position eines TTI eines Unterrahmens anzuzeigen, in dem sich der Ressourcenblock befindet, wobei die N TTIs TTIs im geplanten Träger sind, die in der gleichen Zeitperiode wie ein primäres TTI im planmäßigen Träger sind, wobei das primäre TTI ein TTI eines Unterrahmens ist, der im geplanten Träger ist und der gleichzeitig mit dem Unterrahmen übertragen wird, in dem sich der Ressourcenblock befindet, und N eine positive ganze Zahl größer als 1 ist, wobei die TTI-Anzeigeinformationen eine Ressourcenblocknummer des Ressourcenblocks ist.

2. Trägerplanungsverfahren, das Folgendes umfasst:
Empfangen (303), durch die Benutzereinrichtung, der Übertragungszeitintervall(TTI)-Anzeigeinformationen, die durch Verwenden eines Planungsträgers gesendet werden, und
Bestimmen (304), durch die Benutzereinrichtung, basierend auf den TTI-Anzeigeinformationen, einer Position in einem geplanten Träger eines TTI eines Unterrahmens, in dem sich ein von einer Basisstation geplanter Ressourcenblock befindet,
wobei der geplante Träger der Träger ist, dessen Ressourcenblock durch Verwenden des Planungsträgers geplant ist,
und die TTI-Anzeigeinformationen verwendet werden, um in N TTIs eine Position eines TTI eines Unterrahmens anzuzeigen, in dem sich der Ressourcenblock befindet, wobei die N TTIs TTIs im geplanten Träger sind, die in der gleichen Zeitperiode wie ein primäres TTI im planmäßigen Träger sind, wobei das primäre TTI ein TTI eines Unterrahmens ist, der im geplanten Träger ist und der gleichzeitig mit dem Unterrahmen übertragen wird, in dem sich der Ressourcenblock befindet, und N eine positive ganze Zahl größer als 1 ist, wobei die TTI-Anzeigeinformationen eine Ressourcenblocknummer des Ressourcenblocks ist.

3. Trägerplanungsvorrichtung, die Folgendes umfasst:
eine Bestimmungseinheit (801), die konfiguriert ist, um Übertragungszeitintervall(TTI)-Anzeigeinformationen zu bestimmen, basierend auf einem für die Benutzereinrichtung geplanten Ressourcenblock, wobei die TTI-Anzeigeinformationen verwendet werden, um in einem geplanten Träger eine Position eines TTI eines Unterrahmens anzuzeigen, in dem sich der Ressourcenblock befindet, und
eine Sendeeinheit (802), die konfiguriert ist, um die TTI-Anzeigeinformationen an die Benutzereinrichtung durch Verwenden eines Planungsträgers zu senden,
wobei der geplante Träger der Träger ist, dessen Ressourcenblock unter Verwendung des Planungsträgers geplant ist,
und die TTI-Anzeigeinformationen verwendet werden, um in N TTIs eine Position eines TTI eines Unterrahmens anzuzeigen, in dem sich der Ressourcenblock befindet, die N TTIs TTIs im geplanten Träger sind, die in der gleichen Zeitperiode wie ein primärer TTI im planmäßigen Träger sind, wobei das primäre TTI ein TTI eines Unterrahmens ist, der im geplanten Träger ist und der gleichzeitig mit dem Unterrahmen übertragen wird, in dem sich der Ressourcenblock befindet, und N eine positive ganze Zahl größer als 1 ist, wobei die TTI-Anzeigeinformationen eine Ressourcenblocknummer des Ressourcenblocks ist.

4. Trägerplanungsvorrichtung, die Folgendes umfasst:
eine Transceivereinheit (901), die konfiguriert ist, um Übertragungszeitintervall(TTI)-Anzeigeinformationen zu empfangen, die durch Verwenden eines Planungsträgers gesendet werden; und
eine Bestimmungseinheit (902), die konfiguriert ist, um, basierend auf den TTI-Anzeigeinformationen, eine Position in einem geplanten Träger eines TTI eines Unterrahmens zu bestimmen, in dem sich ein von einer Basisstation geplanter Ressourcenblock befindet,
wobei der geplante Träger der Träger ist, dessen Ressourcenblock durch Verwenden des Planungsträgers geplant ist,
und die TTI-Anzeigeinformationen verwendet werden, um in N TTIs eine Position eines TTI eines Unterrahmens anzuzeigen, in dem sich der Ressourcenblock befindet, wobei die N TTIs TTIs im geplanten Träger sind, die in der gleichen Zeitperiode wie ein primäres TTI im planmäßigen Träger sind, wobei das primäre TTI ein TTI eines Unterrahmens ist, der im geplanten Träger ist und der gleichzeitig mit dem Unterrahmen übertragen wird, in dem sich der Ressourcenblock befindet, und N eine positive ganze Zahl größer als 1 ist, wobei die TTI-Anzeigeinformationen eine Ressourcenblocknummer des Ressourcenblocks ist.

## Revendications

1. Procédé de programmation de porteuse, comprenant :
la détermination (301), par une station de base, d'informations d'indication d'intervalle de temps de transmission, TTI, sur la base d'un bloc de ressources programmé pour un équipement utilisateur, les informations d'indication TTI étant utilisées pour indiquer une position, dans une porteuse programmée, d'un TTI d'une sous-trame dans laquelle se trouve le bloc de ressources ; et
l'envoi (302), par la station de base, des informations d'indication TTI à l'équipement utilisateur en utilisant une porteuse de programmation, la porteuse programmée étant la porteuse dont le bloc de ressources est programmé en utilisant la porteuse de programmation, et les informations d'indication TTI étant utilisées pour indiquer une position, dans N TTI, du TTI de la sous-trame dans laquelle se trouve le bloc de ressources, les N TTI étant des TTI dans la porteuse programmée, lesquels sont situés dans la même période de temps qu'un TTI primaire dans la porteuse de programmation, le TTI primaire étant un TTI d'une sous-trame qui se trouve dans la porteuse de programmation et qui est transmis en même temps que la sous-trame dans laquelle se trouve le bloc de ressources, et N est un entier positif supérieur à 1, les informations d'indication TTI étant un numéro de bloc de ressource du bloc de ressources.

2. Procédé de programmation de porteuse, comprenant :
la réception (303), par l'équipement utilisateur, d'informations d'indication d'intervalle de temps de transmission, TTI, qui sont envoyées en utilisant un support de programmation ; et
la détermination (304), par l'équipement utilisateur sur la base des informations d'indication TTI, d'une position, dans une porteuse programmée, d'un TTI d'une sous-trame dans laquelle se trouve un bloc de ressources programmé par une station de base, la porteuse programmée étant la porteuse dont le bloc de ressources est programmé en utilisant la porteuse de programmation, et les informations d'indication TTI étant utilisées pour indiquer une position, dans N TTI, du TTI de la sous-trame dans laquelle se trouve le bloc de ressources, les N TTI étant des TTI dans la porteuse programmée, lesquels sont situés dans la même période de temps qu'un TTI primaire dans la porteuse de programmation, le TTI primaire étant un TTI d'une sous-trame qui se trouve dans la porteuse de programmation et qui est transmis en même temps que la sous-trame dans laquelle se trouve le bloc de ressources, et N est un entier positif supérieur à 1, les informations d'indication TTI étant un numéro de bloc de ressource du bloc de ressources.

3. Appareil de programmation de porteuse, comprenant :
une unité de détermination (801) configurée pour déterminer des informations d'indication d'un intervalle de temps de transmission, TTI, sur la base d'un bloc de ressources programmé pour un équipement utilisateur, les informations d'indication TTI étant utilisées pour indiquer une position, dans une porteuse programmée, d'un TTI d'une sous-trame dans laquelle se trouve le bloc de ressources ; et
une unité d'envoi (802) configurée pour envoyer les informations d'indication TTI à l'équipement utilisateur en utilisant une porteuse de programmation, la porteuse programmée étant la porteuse dont le bloc de ressources est programmé en utilisant la porteuse de programmation, et les informations d'indication TTI étant utilisées pour indiquer une position, dans N TTI, des TTI de la sous-trame dans laquelle se trouve le bloc de ressources, les N TTI étant des TTI dans la porteuse programmée, lesquels sont situés dans la même période de temps qu'un TTI primaire dans la porteuse de programmation, le TTI primaire étant un TTI d'une sous-trame qui se trouve dans la porteuse de programmation et qui est transmis en même temps que la sous-trame dans laquelle se trouve le bloc de ressources, et N est un entier positif supérieur à 1, les informations d'indication TTI étant un numéro de bloc de ressource du bloc de ressources.

4. Appareil de programmation de porteuse, comprenant :
une unité d'émetteur-récepteur (901) configurée pour recevoir des informations d'indication d'intervalle de temps de transmission, TTI, lesquelles informations sont envoyées en utilisant une porteuse de programmation ; et
une unité de détermination (902) configurée pour déterminer, sur la base des informations d'indication TTI, une position, dans une porteuse programmée, d'un TTI d'une sous-trame dans laquelle se trouve un bloc de ressources programmé par une station de base, la porteuse programmée étant la porteuse dont le bloc de ressources est programmé en utilisant la porteuse de programmation, et les informations d'indication TTI étant utilisées pour indiquer une position, dans N TTI, du TTI de la sous-trame dans laquelle se trouve le bloc de ressources, les N TTI étant des TTI dans la porteuse programmée, lesquels sont situés dans la même période de temps qu'un TTI primaire dans la porteuse de programmation, le TTI primaire étant un TTI d'une sous-trame qui se trouve dans la porteuse de programmation et qui est transmis en même temps que la sous-trame dans laquelle se trouve le bloc de ressources, et N est un entier positif supérieur à 1, les informations d'indication TTI étant un numéro de bloc de ressource du bloc de ressources.
